# EUROPÄISCHE PATENTSCHRIFT

(11) **EP 2 634 468 B1**
(45) Veröffentlichungstag und Bekanntmachung des Hinweises auf die Patenterteilung: **23.04.2014**
(21) Anmeldenummer: 12001351.1
(22) Anmeldetag: 29.02.2012
(51) Int. Cl.: F16L 21/025, F16L 21/035, F16L 25/00

(54) **Dichtring und Steckmuffenverbindung**
Sealing ring and connection with a plug-in socket
Bague d'étanchéité et raccord de manchon emboîtable

(43) Veröffentlichungstag der Anmeldung: 04.09.2013
(73) Patentinhaber: DS Dichtungstechnik GmbH, 48301 Nottuln (DE)
(72) Erfinder: Steinhoff, Albert, 48301 Nottuln (DE); Kloppenburg, Ingo, 48301 Nottuln (DE); Wellenbrock, Klaus, 48301 Nottuln (DE); Kuhlage, Henrik, 48231 Warendorf-Milte (DE)
(74) Vertreter: Grünecker, Kinkeldey, Stockmair & Schwanhäusser

(56) Entgegenhaltungen:
- EP-A1- 0 011 919
- EP-A1- 0 750 149
- EP-A1- 0 793 041
- EP-A2- 0 853 209
- DE-A1- 3 817 868
- DE-A1- 3 826 622
- DE-A1- 10 336 424
- DE-C1- 4 205 278
- US-A1- 2010 225 111

## Beschreibung

Die vorliegende Erfindung betrifft einen Dichtring, der zwischen einem Spitzende und einer Glockenmuffe zweier steckmuffenverbundener Betonrohre anzuordnen ist. Dieser Dichtring hat einen Dichtungskörper mit einer Rollhaut. Die Rollhaut ist üblicherweise einteilig an dem Dichtungskörper angeformt und erlaubt eine gleitende Relativbewegung zwischen dem Spitzende und der Glockenmuffe. Beim Einbringen des Spitzendes in die Glockenmuffe trifft das Spitzende auf die Rollhaut und nimmt diese mit, sodass das Dichtungsmaterial im Bereich der Rollhaut nicht relativ zu dem Spitzende bewegt wird. Die Relativbewegung findet vielmehr innerhalb der Rollhaut statt. Die Außenflächen der Dichtung liegen beim Fügen der Rohre danach üblicherweise im Wesentlichen ortsfest relativ zu der Oberfläche des Spitzendes einerseits und der Glockenmuffe andererseits.

Ein Dichtring der eingangs genannten Art ist beispielsweise aus der EP 0 853 209 bekannt. Die Rollhaut ist üblicherweise innenseitig mit einem Schmiermittel versehen. Es handelt sich hierbei üblicherweise um ein Silikonöl.

Ein weiterer Dichtring ist aus dem Stand der Technik DE 38 26 622 A1 bekannt. Dieser Stand der Technik offenbart einen Dichtring für eine Steckmuffenverbindung, welcher eine im Wesentlichen dreieckige Form aufweist und mit einer einstückig daran angeformten Rollhaut versehen ist. Die Rollhaut wird vor dem Fügen der Rohre auf eine ihr benachbarte Seitenfläche des Rings umgeklappt aufgelegt. Die der Seitenfläche zugekehrte Seite der Fahne ist dabei zuvor mit einem Gleitlack bestrichen worden.

Die gattungsbildende EP 0 011 919 A1 offenbart einen Dichtungsring mit einem Grundkörper und einem dünnen Dichtungsabschnitt, welcher als Rollhaut zusammen mit dem Grundkörper einen Hohlraum ausbildet. Wände des dünnen Dichtungsabschnittes sind bedeckt mit einem Schmiermittel, sodass ein Gleiten des dünnen Dichtungsabschnitts während eines Zusammenbaus von zu fügenden Teilen ermöglicht wird.

Bei der Herstellung des Dichtrings nach der EP 0 853 209 wird das den Dichtring ausformende Elastomermaterial als Halbzeug endlos extrudiert. Danach werden Längenstücke aus dem Halbzeug geschnitten und zu einem Ring geformt. Die Stoßseiten werden miteinander verbunden. Das Schmiermittel, d. h. das Silikonöl, wird üblicherweise durch eine Injektionsnadel unter die Rollhaut eingebracht. Des Weiteren müssen Maßnahmen getroffen werden, um sicherzustellen, dass das Silikonöl vollumfänglich auf der Innenseite der Rollhaut verteilt aufgebracht ist. Hierzu wird üblicherweise der Dichtring auf einen Kranz aufgezogen, dessen Mittellängsachse sich horizontal erstreckt und der um diese Mittellängsachse gedreht wird. Durch den Einfluss der Erdschwere verteilt sich das Silikonöl gleichmäßig im Innern der Rollhaut, die üblicherweise als umfänglich geschlossener Gleitschlauch ausgebildet ist.

Die zuvor beschriebene Herstellung des Dichtrings ist nicht unproblematisch. So ist eine Vielzahl von Arbeitsgängen zur Herstellung des Dichtrings erforderlich. Das Silikonöl kann im Übrigen aus der Einstichstelle oder aus Defekten an der Rollhaut austreten. Im Rahmen des Einbaus der Dichtringe zwischen zwei steckmuffenverbundenen Betonrohren im Feld haftet Verschmutzung über das außen freiliegende Silikonöl an dem Dichtring an und wird dementsprechend mit in die Steckmuffenverbindung eingebracht. Es kann dort zu Schäden an dem Dichtring und Undichtigkeiten kommen. Darüber hinaus kann auch bei sorgfältiger Verfahrensführung nicht immer ausgeschlossen werden, dass sich das Silikonöl nicht gleichmäßig innerhalb der Rollhaut auf dem Umfang verteilt hat. So kann es zu Behinderungen der Gleitbewegungen beim Fügen der beiden Rohre im Bereich der Rollhaut kommen. Schließlich ist es im Stand der Technik erforderlich, die Rollhaut schlauchförmig auszubilden, d. h. mit einem umfänglich geschlossenen inneren Raum zu versehen, in dem das Silikonöl eingeschlossen ist, da das Silikon andernfalls austreten kann.

Der vorliegenden Erfindung liegt das Problem zugrunde, einen Dichtring der eingangsgenannten Art zu schaffen, bei dem die o. a. Probleme ganz oder teilweise verhindert werden.

Zur Lösung dieses Problems wird mit der vorliegenden Erfindung ein Dichtring mit den Merkmalen von Anspruch 1 vorgeschlagen. Bei diesem Dichtring hat die Rollhaut einen zumindest zweischichtigen Aufbau. Bei diesem zweischichtigen Aufbau hat eine die Rollhaut innenseitig begrenzende Schicht selbstschmierende Eigenschaften. Mit anderen Worten besteht die selbstschmierende Schicht aus einem Elastomer, in dem ein Gleitmittel eingelagert ist, welches über die Nutzungsdauer und insbesondere bei einer von außen auf das die innere Schicht bildende Material wirkenden Druckkraft aus diesem heraus gedrängt und an der freiliegenden Oberfläche der selbstschmierenden Schicht herausgedrückt wird. Ein entsprechendes selbstschmierendes Material ist beispielsweise in Verbindung mit gattungsgemäßen Dichtringen aus der DE 195 22 279 A1 oder auch der EP 556 545 B1 bekannt.

Diese selbstschmierende innere Schicht ist von wenigstens einer äußeren Schicht umgeben. Bei dieser äußeren Schicht handelt es sich üblicherweise um eine konventionelle Schicht aus einem elastomeren Material, an der im Feld üblicherweise keine Verschmutzung in besonderer Weise haften bleibt.

Dieses die äußere Schicht ausbildende Elastomermaterial formt gemäß einer bevorzugten Weiterbildung der vorliegenden Erfindung eine Befestigungsbasis aus. Die Befestigungsbasis dient der Montage und Befestigung an dem Spitzende oder der Glockenmuffe. Üblicherweise erfolgt die Befestigung an dem Spitzende. Die Befestigungsbasis ist hierfür üblicherweise auf das Spitzende aufgeschoben und stützt sich in axialer Richtung an einer Anlageschulter des Spitzendes ab.

Gemäß einer bevorzugten Weiterbildung der vorliegenden Erfindung bildet die Befestigungsbasis eine Gleitrampe aus, an welcher das relativ zu dem Dichtring bei der Montage bewegte vordere Ende des zu fügenden Betonrohres unter Zwischenlage der Rollhaut abgleiten kann, um dieses relativ zu dem den Dichtring tragenden anderen Rohrende zu positionieren, und zwar idealerweise im Grunde koaxial hierzu.

Gemäß einer bevorzugten Weiterbildung der vorliegenden Erfindung ist das selbstschmierende Material an einer solchen Gleitrampe als verdicktes Kissen ausgebildet. Dementsprechend ergibt sich dort, wo mutmaßlich beim Fügen ein punktueller Druck durch ein Auftreffen des vorderen Endes des anderen Betonrohres auftritt, ein Reservoir für das Schmiermittel, welches aufgrund des wirkenden Druckes in vermehrter Weise freigesetzt wird. Das Kissen ist dabei vorzugsweise im Querschnitt ellipsenförmig ausgebildet. Der dickste Querschnitt des Kissens ist üblicherweise mittig an dem Kissen vorgesehen und dort, wo eventuelle axiale Kräfte über die Befestigungsbasis in das den Dichtring tragende Betonrohr abgeleitet werden. Folglich ergibt sich in dem druckbeaufschlagten Bereich des Dichtrings eine besonders gute Schmierung.

Die Rollhaut ist in an sich bekannter Weise als umfänglicher Schlauch ausgeformt, sodass auch im Feld keine Verschmutzung auf die Innenseite der Rollhaut gelangen kann.

Die vorliegende Erfindung bietet den Vorteil einer einfacheren Herstellung des Dichtrings. Es ist nicht mehr nötig, nach dem Ausformen eines umfänglich geschlossenen Dichtrings Schmiermittel einzubringen und gleichmäßig zu verteilen. Darüber hinaus kann die Rollhaut auch eine nach außen sich öffnende Tasche ausformen, da das Gleitmittel in der selbstschmierenden Schicht aufgenommen ist und erst bei Benutzung austritt, sodass jedenfalls bei der Montage und Vorpositionierung der Rohre zum Fügen nicht zu befürchten ist, dass Verschmutzung an an der Oberfläche der Rollhaut freiliegendem Gleitmittel anhaftet und mit in die Muffenverbindung eingebracht wird.

Die Steckmuffenverbindung für den Kanalbau, die einen nebengeordneten Aspekt der vorliegenden Erfindung darstellt, umfasst einen Dichtring der vorerwähnten Art. Die Steckmuffenverbindung ist in Anspruch 5 spezifiziert.

Weitere Einzelheiten und Vorteile der vorliegenden Erfindung ergeben sich aus der nachfolgenden Beschreibung eines Ausführungsbeispiels in Verbindung mit der Zeichnung. In dieser Zeichnung zeigen
- Figur 1: eine Querschnittsansicht eines Ausführungsbeispiels;
- Figur 2: das in Figur 1 gezeigte Ausführungsbeispiel montiert an einem Spitzende vor dem Fügen der Steckmuffenverbindung und
- Figur 3: eine Darstellung gemäß Figur 2 nach dem Fügen der Steckmuffenverbindung.

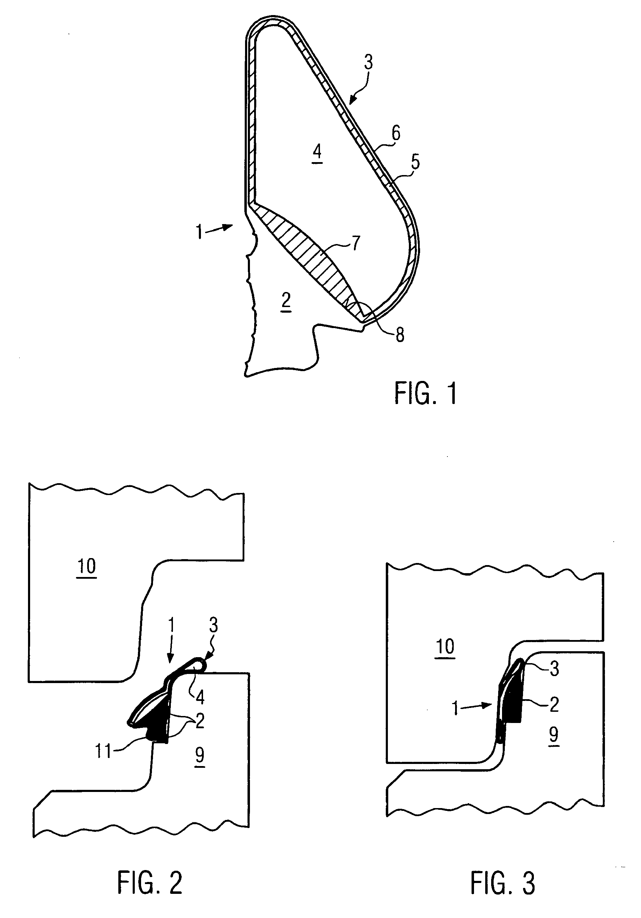

Die Figur 1 zeigt eine Querschnittansicht eines Ausführungsbeispiels eines Dichtrings 1, der eine Befestigungsbasis 2 und eine Rollhaut in Form eines umfänglich geschlossenen Schlauches 3 hat. Wie der Schnittansicht zu entnehmen ist, besteht der Dichtring 1 aus zwei unterschiedlichen Komponenten, die mittels Koextrusion hergestellt sind. Die Außenfläche des Dichtrings 1 wird dabei aus einem üblichen Elastomermaterial gebildet. Ein von dem geschlossenen Schlauch 3 umgebener Hohlraum 4 wird durch ein selbstschmierendes Elastomermaterial gebildet, welches als Schicht 5 auf der Innenseite der Rolhaut 3 vorgesehen wird. Die Rollhaut 3 hat dementsprechend einen zweischichtigen Aufbau mit der selbstschmierenden Schicht 5 als innerer Schicht und einer äußeren Schicht 6, die durch das die Befestigungsbasis 2 ausformende Elastomermaterial gebildet wird. Im Bereich des Schlauches 3 sind die äußere Schicht 6 und die selbstschmierende Schicht 5 mit jeweils konstanter Stärke ausgebildet, wobei die selbstschmierende Schicht in etwas doppelt so stark ausgebildet ist wie die äußere Schicht 6. Der Schlauch 3 ist an die Befestigungsbasis 2 angeschlossen. Die voneinander beabstandeten Enden des Schlauches 3 werden überbrückt von einem ellipsenförmig ausgebildeten verdickten Kissen 7 aus dem selbstschmierenden Elastomermaterial. Dieses selbstschmierende Kissen 7 befindet sich oberhalb einer Gleitrampe 8, die durch die Befestigungsbasis 2 ausgeformt ist. Dementsprechend ist die selbstschmierende Schicht 5 im Bereich der Gleitrampe 8 verdickt ausgeformt.

Die Figuren 2 und 3 zeigen das Fügen eines mit Bezugszeichen 9 gekennzeichneten Spitzendes und einer mit Bezugszeichen 10 gekennzeichneten Glockenmuffe. Die Abdichtung zwischen der Glockenmuffe 10 und dem Spitzende 9 erfolgt durch das zuvor diskutierte Ausführungsbeispiel des Dichtrings 1. Dieser ist auf das Spitzende 9, welches das Einsteckteil ausbildet, aufgeschoben und liegt in axialer Richtung gegen eine Anlageschulter 11 an und ist dementsprechend in axialer Richtung festgelegt. Vor dem Fügen der Rohre 9, 10 wird der Schlauch 3 in Einführrichtung an das vordere Ende des Spitzendes 9 gelegt. Bei dem gezeigten Ausführungsbeispiel liegt der Schlauch 3 teilweise auf der Stirnseite des Spitzendes 9 auf. Beim Einbringen des Spitzendes 9 in die Glockenmuffe 10 stößt eine vordere Kante der Glockenmuffe 10 gegen den Schlauch 3. Es kommt zu einer Haftung der äußeren Fläche des Schlauches 3 an dieser Kante. Der Schlauch 3 wird mitgenommen. Insbesondere bei einer nicht genau konzentrischen Zustellbewegung von Spitzende 9 und Glockenmuffe 10 stößt die vordere Kante gegen das Kissen 7. Infolge der Druckbelastung gibt die selbstschmierende Schicht 5 insbesondere im Bereich des Kissen 7 vermehrt Schmiermittel ab, sodass die Gleitbewegung des Schlauches relativ zu der Befestigungsbasis 4 gut geschmiert vonstatten geht.

### Bezugszeichenliste

- 1: Dichtring
- 2: Befestigungsbasis
- 3: Schlauch
- 4: Hohlraum
- 5: selbstschmierende Schicht
- 6: äußere Schicht
- 7: Kissen
- 8: Gleitrampe
- 9: Spitzende
- 10: Glockenmuffe
- 11: Anlageschulter

## Patentansprüche

1. Dichtring (1), der zwischen einem Spitzende (9) und einer Glockenmuffe (10) zweier steckmuffenverbundener Betonrohre anzuordnen ist, mit wenigstens einem Dichtungskörper (2) mit einer Rollhaut (3), wobei die Rollhaut (3) als umfänglich geschlossener Schlauch (3) ausgeformt ist,
**dadurch gekennzeichnet,**
**dass** die Rollhaut (3) zumindest einen zweischichtigen Aufbau (5, 6) mit einer die Rollhaut (3) innen begrenzenden selbstschmierenden Schicht (5) aus einem Elastomermaterial, in der ein Gleitmittel eingelagert ist, das bei einer Druckbelastung aus der Schicht austritt, hat.

2. Dichtring (1) nach Anspruch 1, **dadurch gekennzeichnet, dass** ein eine äußere Schicht (6) der Rollhaut (3) ausformendes Elastomermaterial eine Befestigungsbasis (2) ausbildet.

3. Dichtring (1) nach Anspruch 1 oder 2, **dadurch gekennzeichnet, dass** das selbstschmierende Material an einer Gleitrampe (8) ein verdicktes Kissen (7) ausbildet.

4. Dichtring (1) nach Anspruch 3, **dadurch gekennzeichnet, dass** das verdickte Kissen (7) im Querschnitt ellipsenförmig ausgebildet ist.

5. Steckmuffenverbindung für den Kanalbau, bestehend aus einer Glockenmuffe (10) eines Betonrohres, einem Spitzende (9) eines Betonrohres als Einsteckteil und einem Dichtring (1), der zwischen dem Spitzende (9) und der Glockenmuffe (10) vorgesehen ist, **gekennzeichnet durch** einen Dichtring (1) nach einem der Ansprüche 1 bis **4.**

## Claims

1. Sealing ring (1) intended to be disposed between a spigot end (9) and a socket end (10) of two concrete pipes connected by a spigot-socket joint, with at least one seal body (2) with a rolling membrane (3), the rolling membrane (3) being provided in the form of a circumferentially closed hose (3),
**characterised in that**
the rolling membrane (3) has at least a two-layered structure (5, 6) with a self-lubricating layer (5) of an elastomeric material internally bounding the rolling membrane (3) and incorporating a lubricant which moves out of the layer when subjected to pressure.

2. Sealing ring (1) as claimed in claim 1, **characterised in that** an elastomeric material forming an outer layer (6) of the rolling membrane (3) serves as a fixing base (2).

3. Sealing ring (1) as claimed in claim 1 or 2, **characterised in that** the self-lubricating material forms a thickened cushion (7) on a slide ramp (8).

4. Sealing ring (1) as claimed in claim 3, **characterised in that** the thickened cushion (7) is of an elliptical shape in cross-section.

5. Spigot-socket joint for constructing ducts, comprising a socket end (10) of a concrete pipe, a spigot end (9) of a concrete pipe constituting a push-in part and a sealing ring (1) which is disposed between the spigot end (9) and the socket end (10), **characterised by** a sealing ring (1) as claimed in one of claims 1 to 4.

## Revendications

1. Bague d'étanchéité (1) qui est à agencer entre un about mâle (9) et une tulipe (10) de deux tuyaux de béton assemblés par emmanchement réciproque du type à manchon, et comprenant au moins un corps d'étanchéité (2) avec une membrane roulante (3), la membrane roulante (3) étant réalisée sous la forme d'un boyau (3) fermé de manière périphérique,
**caractérisée en ce que** la membrane roulante (3) possède au moins un mode de construction en deux couches (5, 6), comprenant une couche autolubrifiante (5) en un matériau d'élastomère, qui délimite intérieurement la membrane roulante (3) et dans laquelle est noyé un agent antifriction, qui, lors d'une sollicitation en compression s'échappe de la couche.

2. Bague d'étanchéité (1) selon la revendication 1, **caractérisée en ce qu'**un matériau élastomère, qui réalise une couche extérieure (6) de la membrane roulante (3), forme une base de fixation (2).

3. Bague d'étanchéité (1) selon la revendication 1 ou la revendication 2, **caractérisée en ce que** le matériau autolubrifiant forme, sur une rampe de glissement (8), un coussin (7) renflé.

4. Bague d'étanchéité (1) selon la revendication 3, **caractérisée en ce que** le coussin (7) renflé est de configuration elliptique en section transversale.

5. Raccord à emmanchement du type à manchon pour la construction de canalisations, constitué d'une tulipe (10) d'un tuyau de béton, d'un about mâle (9) d'un tuyau en béton en tant que pièce à emmancher, et d'une bague d'étanchéité (1), qui est prévue entre l'about mâle (9) et la tulipe (10), **caractérisé par** une bague d'étanchéité (1) selon l'une des revendications 1 à 4.
